# EUROPEAN PATENT APPLICATION

(11) **EP 0 587 187 A1**
(43) Date of publication of application: **16.03.1994**
(21) Application number: 93114605.4
(22) Date of filing: 10.09.1993
(51) Int. Cl.: H04N 1/40

(54) **Image data recording apparatus and method and facsimile apparatus comprising such recording apparatus**

(30) Priority: 10.09.1992 JP 241847/92
(71) Applicant: KABUSHIKI KAISHA TOSHIBA, Kawasaki-shi, Kanagawa-ken 210 (JP)
(72) Inventor: Aihara, Masayoshi, c/o Intellectual Property Div., Tokyo 105 (JP)
(74) Representative: Henkel, Feiler, Hänzel & Partner

(57) **Abstract**

A recording apparatus which includes input means (1) for inputting image data consisting of a plurality of pixels and pixel forming means (41) for two-dimensionally recording the pixels on the basis of the control signal, is characterized by comprising instruction means (2) for instructing the type of the image corresponding to the image data, pixel size determination means (31) for setting the size of each pixel to a desired value in accordance with the type of the image instructed by the instruction means (2), and pixel form control means (47) for controlling the pixel forming means (41) to form pixels of the size set by the pixel size determination means (31).

## Description

This invention relates to a recording apparatus for forming an image based on image data, such as an electrophotographic recording apparatus, a thermal recording apparatus, etc., also a method for recording the image, and a facsimile apparatus having a recording section consisting of the recording apparatus.

Recently, a laser printer which serves as high-speed and high-quality recording apparatus is available. The laser printer has been used, for example, as a recording section of a facsimile apparatus, since this printer can perform high-speed and high-quality recording by use of usual paper sheets.

The laser printer performs exposure by scanning a photosensitive drum with a laser beam emitted from a laser diode employed therein while controlling emission/non-emission of the diode in accordance with image data.

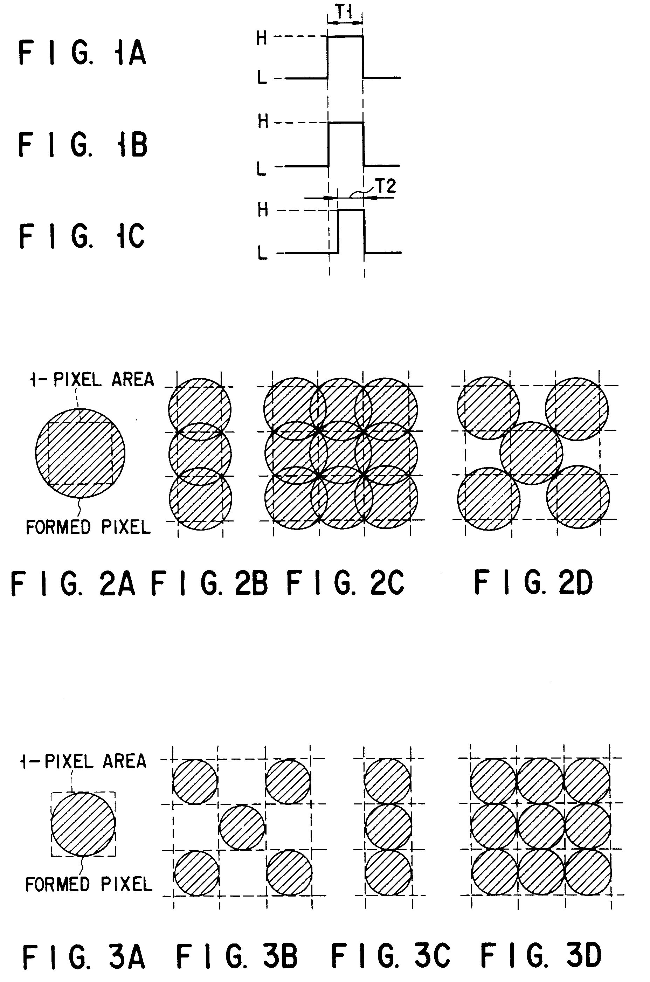

As is shown in Fig. 1A, the image data consists of a signal, which has high level over a scanning period T1 per one pixel if the pixel is black, and low level over the period T1 if the pixel is white. Conventionally, as shown in Fig. 1B, a signal for driving the laser diode synchronizes in level with the image data signal shown in Fig. 1A. Thus, emission/non-emission of the laser diode is controlled in units of the scanning period T1 per one pixel. At the time of emission, the laser diode emits a laser beam over the scanning period T1.

The photosensitive drum of the laser printer has its electrical resistance varied in accordance with the incident quantity of light, and has the attenuation amount of charge varied in accordance with an incidence period. Driving the laser diode with the use of the driving signal shown in Fig. 1B forms, for example, a pixel as shown in Fig. 2A. In Fig. 2A, a hatched circular area is the actually formed pixel, and a square area enclosed by the broken line is a "one pixel area".

As described above, a pixel which covers the "one pixel area" can be recorded by causing the laser diode to emit light over the scanning period T1. In this recording method, pixels can be connected to one another as shown in Fig. 2B, and therefore a clear linear line can be recorded. Further, a high quality all-black image can be obtained as shown in Fig. 2C. However, in the case of recording an image obtained, for example, by a bayer-type dither method, specifically in the case of recording a pattern as shown in Fig. 2D, good color gradation cannot be reproduced by use of such a pixel as is larger than the "one pixel area".

As is shown in Fig. 1C, if the period for which the driving signal is kept at "H" level is set to a period T2 shorter than the above scanning period T1 in order to eliminate the above disadvantage, a pixel smaller than the "one pixel area" as shown in Fig. 3A can be obtained. This method can provide a good half-tone pattern as shown in Fig. 3B if it is applied to recording a pattern obtained by use of the bayer-type dither method. In this case, however, a clear line or a good all-black image cannot be obtained since clearances are formed between pixels as shown in Figs. 3C and 3D.

It is difficult for the above-described conventional apparatus to record good images of a pseudo half tone image (e.g. a dither image) consisting of dispersedly arranged pixels and a binary image (e.g. a clear line or an all-black image) consisting of concentrically arranged pixels.

The same disadvantage as above exists in other electrophotographic recording apparatuses such as a light emission diode (LED) printer and a liquid crystal (LCD) printer, a thermal recording apparatus such as a thermal printer, and recording apparatuses such as an ink jet recording apparatus and an electrostatic recording apparatus.

It is the object of the invention to provide a recording apparatus and a method for recording an image data, capable of performing high quality recording of both a pseudo half tone image and a binary image, and provide a facsimile apparatus having a recording section consisting of the recording apparatus.

The recording apparatus of the invention is characterized by comprising: input means for inputting image data consisting of a plurality of pixels; instruction means for instructing the type of the image corresponding to the image data; pixel size determination means for setting the size of each pixel to a desired value in accordance with the type of the image instructed by the instruction means; pixel form control means for outputting a control signal to form pixels of the size set by the pixel size determination means; and pixel forming means for two-dimensionally recording the pixels on the basis of the control signal. The image instruction means includes means for instructing that the image corresponding to the image data is one of a binary image and a pseudo half tone image. In addition, the pixel size is one of a first size and a second size smaller than the first size, and the pixel size determination means includes means for setting the pixel size to the first size when the instruction means has instructed that the image is the binary image, and setting to the second size when the instruction means has instructed that the image is the pseudo half tone image.

In the recording apparatus constructed as above, the type of an image to be recorded is instructed, and the size of each pixel is set to one of two different sizes on the basis of the instructed image type. The pixel forming means is controlled to form pixels of the set size.

Accordingly, an image consisting of pixels of the set size is output as a recorded image.

By virtue of the above-described structure, the recording apparatus of the invention can perform high quality recording of an image, irrespective of whether the image is a pseudo half tone image or a binary image.

In the facsimile apparatus having means for receiving transmitted image data, and recording means which includes pixel forming means for forming a received image by two-dimensionally recording the pixels of an image corresponding to the transmitted image data, the facsimile apparatus is characterized in that the recording means includes: image type determination means for determining the type of the image corresponding to the transmitted image data; pixel size determination means for setting the size of each pixel to a desired value on the basis of the type determined by the image type determination means; and pixel form control means for controlling the pixel forming means so as to form pixels of the size set by the pixel size determination means. In addition, the image type determination means includes means for determining that the image corresponding to the image data is one of a binary image and a pseudo half tone image, and the pixel size is one of a first size and a second size smaller than the first size, and the pixel size determination means includes means for setting the pixel size to the first size when the image type determination means has determined that the image is the binary image, and setting to the second size when the image type determination means has determined that the image is the pseudo half tone image.

The facsimile apparatus of the invention determines the type of an image received (e.g., whether the image is a pseudo half tone image or a binary image), and the size of each pixel is set to one of two different sizes on the basis of the determined image type. The pixel forming means is controlled to form pixels of the set size.

Accordingly, an image consisting of pixels of the set size is output as the received image.

By virtue of the above-described structure, the facsimile apparatus of the invention can perform high quality recording of the received image, irrespective of whether the image is a pseudo half tone image or a binary image.

In addition, the recording method of the invention is characterized by comprising: the first step of inputting image data consisting of a plurality of pixels; the second step of determining the type of the image corresponding to the image data; the third step of setting the size of each pixel of the image to a desired size in accordance with the determined type; the fourth step of forming pixels of the set size; and the fifth step of two-dimensionally recording the pixels on the basis of the pixels formed in the fourth step. The method of the present invention, the same advantages as described above can be obtained.

This invention can be more fully understood from the following detailed description when taken in conjunction with the accompanying drawings, in which:
Figs. 1A to 1C are views, useful in explaining prior art;
Figs. 2A to 2D are views, useful in explaining prior art;
Figs. 3A to 3D are views, useful in explaining prior art;
Fig. 4 is a view, showing an essential part of a recording apparatus according to an embodiment of the invention;
Fig. 5 is a flowchart, useful in explaining processing performed in a control section 3 shown in Fig. 4;
Figs. 6A to 6C are views, showing signals generated from respective sections shown in Fig. 4;
Fig. 7 is a view, showing an essential part of a facsimile apparatus according to another embodiment of the invention;
Fig. 8 is a flowchart, useful in explaining processing performed in a control section 3 shown in Fig. 7; and
Figs. 9A to 9C are views, showing signals generated from respective sections shown in Fig. 7.

The embodiments of the invention will be explained with reference to the accompanying drawings.

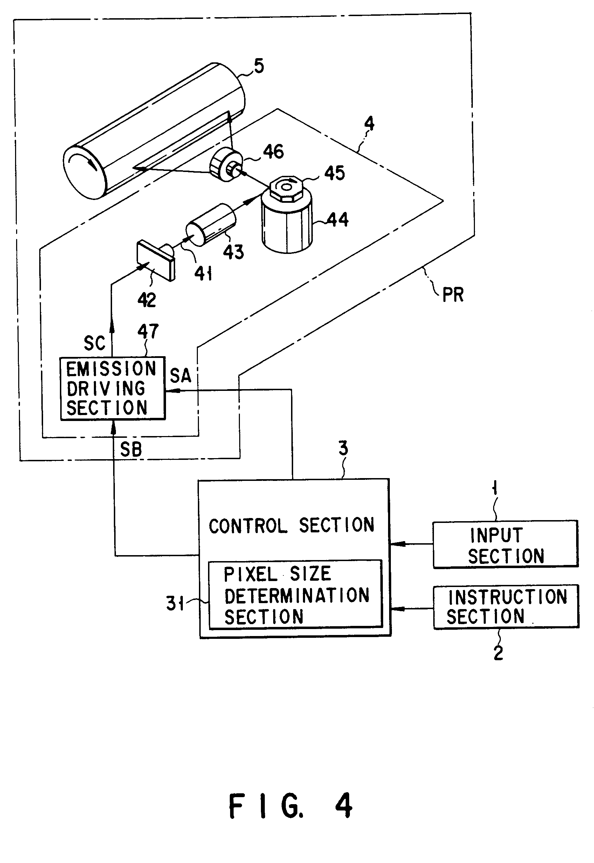

Fig. 4 shows an essential part of a recording apparatus according to an embodiment of the invention.

As is shown in Fig. 4, image data is input into an input section 1, and then supplied to a control section 3. On the other hand, the user operates a instruction section 2 consisting of an operation panel, to indicate whether the input image is a binary image or a pseudo half tone image. The instruction section 2 in turn supplies an instruction to a control section 3.

The image data and the instruction are supplied from the input section 1 and the instruction section 2 to a recording scanning section PR via the control section 3.

The recording scanning section PR is a laser printer, and includes a laser scanner unit (hereinafter called as "LSU") 4 and a photosensitive drum 5. Fig. 4 does not show the other component parts of the recording scanning section PR, such as a charger and a developing unit.

The LSU 4 comprises a laser diode 42 for emitting a laser beam 41, a collimator lens 43 for converting the laser beam 41 to a parallel beam of a predetermined diameter, a polygonal mirror 45 to be rotated at constant speed by a polygonal motor 44 to thereby scan the photosensitive surface of the photosensitive drum 5 with the use of the collimated laser beam 41, an f-ϑ lens 46 for causing the laser beam 41 reflected from the polygonal mirror 45, to scan the photosensitive drum 5 at constant speed, and an emission driving section 47 for emitting a driving signal SC to drive the laser diode 42 in accordance with image data SB output from a decoding section 6. The emission driving section 47 has a function for varying the emission period of the laser diode 42 on the basis of an emission period setting signal SA (hereinafter explained in detail) output from the control section 3.

The control section 3 has a micro-computer which serves as a main control circuit for controlling the overall apparatus, and a pixel size determination section 31. The pixel size determination section 31 selects one of two different predetermined sizes on the basis of an instruction from the instruction section 2, and supplies the emission driving section 47 with a selected size which serves as the emission period setting signal SA, thereby setting a pixel size.

The operation of the recording apparatus constructed as above will now be explained with reference to the control procedure of the control section 3.

In a step SA1, the instruction section 2 instructs whether an image to be recorded is of half tone mode. In a step SA2, the control 3 determines whether the image is of half tone mode.

If it is determined in the step SA2 that the image is not of the half tone mode, that is, if normal mode (binary image mode) is set, the control section 3 shifts the processing program from the step SA2 to a step SA3, where a predetermined pixel size A is selected. If, on the other hand, it is determined in the step SA2 that the image is of half tone mode, the control section 3 shifts the program from the step SA2 to a step SA4, where a predetermined pixel size B which is smaller than the pixel size A is selected. For example, the pixel size A is a size which can substantially be circumscribed about the "one pixel area" as shown in Fig. 2A, whereas the pixel size B is a size which can substantially be inscribed in the "one pixel area" as shown in Fig. 3A.

After selecting one of the pixel sizes A and B, the control section 3 supplies the emission driving section 47 with the selected size serving as the emission period setting signal SA (step SA5). The above processes SA3 to SA5 are performed in the pixel size determination section 31.

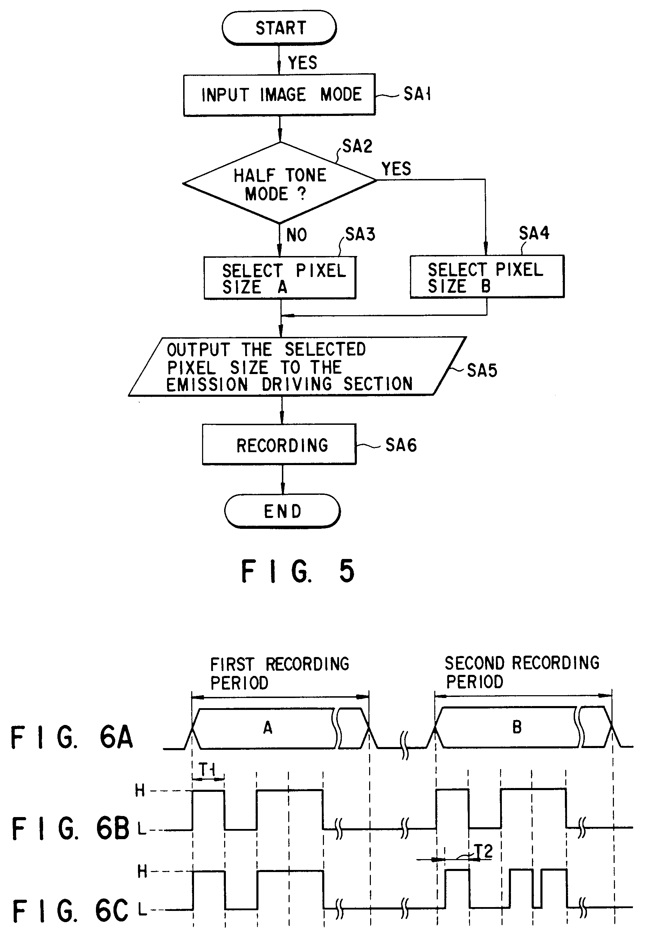

Subsequently, in a step SA6, the control section 31 starts a recording process, specifically reads image data and supplies the emission driving section 47 with an image signal indicative of the image data. The emission driving section 47 drives the laser diode 42 in accordance with the input image signal. The set image mode determines the length of the driving signal SC output from the section 47. Figs. 6A to 6C show signals output from each section shown in Fig. 4. Fig. 6A shows the emission period setting signal SA, which has a first recording period obtained when the binary image mode has been set (i.e., the pixel size A has been selected), and a second recording period obtained when the half tone mode has been set (i.e., the pixel size B has been selected). Figs. 6B and 6C show the image data SB and the driving signal SC, respectively.

In Figs. 6A to 6C, a one pixel emission period of the laser diode 42 is set to a one pixel scanning period T1 where the pixel size A is selected, and is set to a predetermined period T2 shorter than the one pixel scanning period T1 where the pixel size B is selected.

As described above, when the instruction section 2 instructs the binary image mode, i.e., when the recorded image is a binary image, a black pixel is exposed for a relatively long time, and a large pixel which can be circumscribed about the "one pixel area" as shown in Fig. 2A is recorded. On the other hand, when the instruction section 2 instructs the half tone mode, i.e., when the recorded image is a pseudo half tone image, a black pixel is exposed for a relatively short time, and a small pixel which can be inscribed in the "one pixel area" as shown in Fig. 3A is recorded.

As a result, high quality recording can be performed irrespective of whether the input image is a binary image or a half tone image.

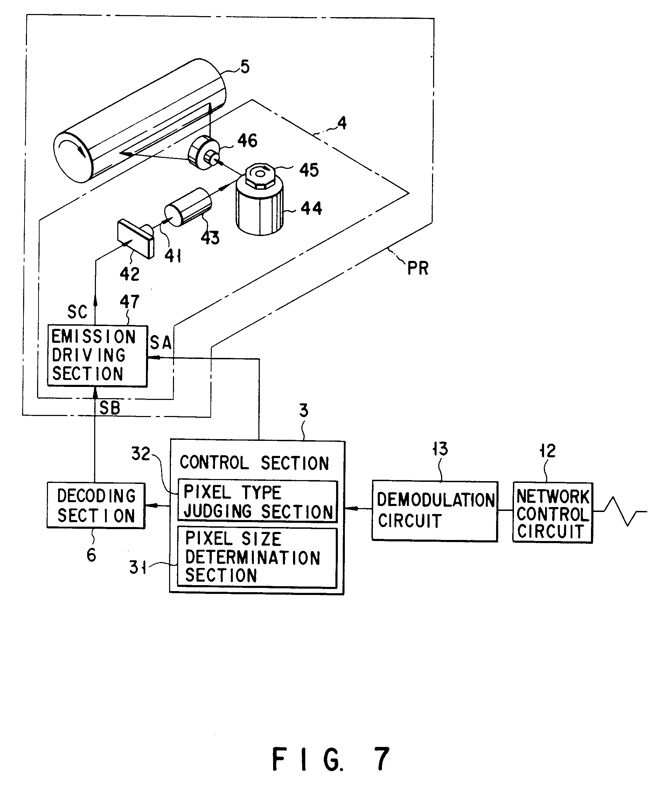

Fig. 7 shows an essential part of a facsimile apparatus according to another embodiment of the invention. In Fig. 7, elements similar to those shown in Fig. 4 are denoted by corresponding reference numerals, and a detailed explanation is omitted.

Image data and control data transmitted via a public telephone line 11 are input into a demodulation circuit 13 via a network control circuit 12. The demodulation circuit 13 demodulates the input image data and control data, and outputs demodulated data items.

The image data output from the demodulation circuit 13 is supplied to the decoding section 6 via the control section 3. The decoding section 6 decodes the supplied image data (which is obtained, for example, after compressed coding such as MH coding), reproduces the image signal, and supplies the reproduced image signal to the recording scanning section PR.

The recording scanning section PR is similar to the laser printer shown in Fig. 4, and therefore its detailed explanation is omitted.

The control section 3 performs general processes necessary to operate a general facsimile apparatus, as well as the processes shown in Fig. 4. Further, the control section 3 has an image type judging section 32 for judging the type of a received image (whether it is a binary image or a pseudo half tone image) from the communication mode set between the facsimile apparatus and a destination terminal. As in the above-described embodiment, the pixel size determination section 31 sets a pixel size according to the type of the image.

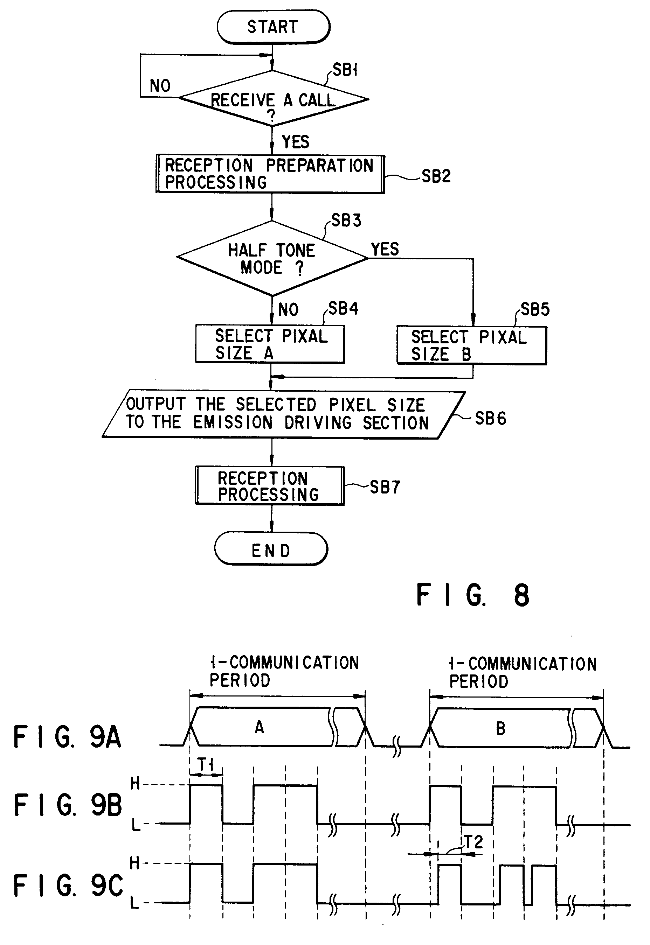

The operation of the facsimile apparatus constructed as above will be explained with reference to the flowchart of Fig. 8.

The control section 3 monitors whether a call has occurred (step SB1). If a call has occurred, the program proceeds from the step SB1 to a step SB2, where preparation of call receiving is performed. This preparation is a known process in which mode setting, training, etc. are performed in the step SB2. After the preparation is completed, the image type judging section 32 determines in a step SB3 whether half tone mode has been set for the received data (what is actually transmitted is a pseudo half tone image such as a dither image).

Since the processes of steps SB3 to SB6 are similar to those of the step SA2 to SA5, respectively, theirs detailed explanation is omitted.

After pixel size selection is performed on the basis of the image mode of the received data, the control section 3 supplies the emission driving section 47 with the selected pixel size as the emission period setting signal SA (step SB6).

The control section 3 performs, in a known manner, a process of receiving the image data supplied via the public telephone line 11, and then terminates the processing as regards communication (step SB7).

While the control section 3 performs the receiving process in the step SB7, the received data is decoded into an image signal by the decoding section 6, and then input into the emission driving section 47. The driving section 47 in turn drives the laser diode 42 in accordance with the input image signal. Figs. 9A to 9C show signals output from each element in Fig. 7. Fig. 9A shows the emission period setting signal SA, and Figs. 9B and 9C show the image data SB and the driving signal SC, respectively

In Figs. 9A to 9C, a one pixel emission period of the laser diode 42 is set to a one pixel scanning period T1 where the pixel size A is selected, and is set to a predetermined period T2 shorter than the one pixel scanning period T1 where the pixel size B is selected.

Thus, when communication is performed in the binary image mode, i.e., when the received image is a binary image, a black pixel is exposed for a relatively long time, and a large pixel which can be circumscribed about the "one pixel area" as shown in Fig. 2A is recorded. On the other hand, when communication is performed in the half tone mode, i.e., when the received image is a pseudo half tone image, a black pixel is exposed for a relatively short time, and a small pixel which can be inscribed in the "one pixel area" as shown in Fig. 3A is recorded.

As a result, high quality recording can be performed irrespective of whether the input image is a binary image or a half tone image, as in the first-explained embodiment.

The invention is not limited to the above embodiments, but may be modified as follows:
(1) A method for determining whether the read (or transmitted) image is a binary image or a pseudo half tone image is not limited to those employed in the embodiments.
(2) Although in the embodiments, a laser printer is used as a recording apparatus, it can be replaced with another electrophotographic recording apparatus or an electrostatic recording apparatus, such as a thermal printer, an ink-jet printer, an LED printer, or an LCD printer.
(3) Although in the above embodiments, the size of a pixel is changed in accordance with an emission period, it may be constructed such that the pixel size is changed depending upon an emission amount, another element or combination thereof.
(4) The pixel size is not limited to those described in the embodiments, but may be set to a desired value in accordance with the characteristics of each element of the apparatus. Further, the pixel size may be selected from three or more values, instead of two values. For example, it may be constructed such that an optimal size is selected based on the saturation of an image.
(5) Although the laser printer employed in the embodiments is of an inverted development scheme type, a normal rotation development scheme type printer can also be employed if the operation principle is inversely applied.

The invention may be modified other than the above, without departing from the scope thereof.

## Claims

1. A recording apparatus which includes input means (1) for inputting image data consisting of a plurality of pixels and pixel forming means (41) for two-dimensionally recording the pixels on the basis of the control signal, is characterized by comprising:
instruction means (2) for instructing the type of the image corresponding to the image data;
pixel size determination means (31) for setting the size of each pixel to a desired value in accordance with the type of the image instructed by said instruction means (2); and
pixel form control means (47) for controlling said pixel forming means (41) to form pixels of the size set by said pixel size determination means (31).

2. The recording apparatus according to claim 1, is characterized in that said image instruction means (2) includes means for instructing that the image corresponding to the image data is one of a binary image and a pseudo half tone image.

3. The recording apparatus according to claim 2, is characterized in that the pixel size is one of a first size and a second size smaller than the first size, and
said pixel size determination means (31) includes means for setting the pixel size to the first size when the instruction means (2) has instructed that the image is the binary image, and setting to the second size when the instruction means (2) has instructed that the image is the pseudo half tone image.

4. The recording apparatus according to claim 1, is characterized in that said pixel form control means (47) includes means for controlling the pixel size by changing a forming period required to form one pixel.

5. A facsimile apparatus comprises means (12, 13) for receiving transmitted image data, and recording means (PR) which includes pixel forming means (41) for forming a received image by two-dimensionally recording the pixels of an image corresponding to the transmitted image data, and is characterized in that
said recording means (PR) includes:
image type determination means (32) for determining the type of the image corresponding to the transmitted image data;
pixel size determination means (31) for setting the size of each pixel to a desired value on the basis of the type determined by said image type determination means (32); and
pixel form control means (47) for controlling said pixel forming means (41) so as to form pixels of the size set by the pixel size determination means (31).

6. The facsimile apparatus according to claim 5, is characterized in that said image type determination means (32) includes means for determining that the image corresponding to the image data is one of a binary image and a pseudo half tone image.

7. The facsimile apparatus according to claim 6, is characterized in that the pixel size is one of a first size and a second size smaller than the first size, and
said pixel size determination means (31) includes means for setting the pixel size to the first size when the image type determination means (32) has determined that the image is the binary image, and setting to the second size when the image type determination means (32) has determined that the image is the pseudo half tone image.

8. The facsimile apparatus according to claim 5, is characterized in that said pixel form control means (47) includes means for controlling the pixel size by changing a forming period required to form one pixel.

9. A method of recording image data which includes a step of inputting image data consisting of a plurality of pixels and a step of two-dimensionally recording the pixels on the basis of the pixels formed in the fourth step, is characterized by comprising:
the first step of determining the type of the image corresponding to the image data;
the second step of setting the size of each pixel of the image to a desired size in accordance with the determined type; and
the third step of forming pixels of the set size.

10. The method of recording image data according to claim 9, is characterized in that the first step includes the step of inputting the type of the image beforehand.

11. The method of recording image data according to claim 9, is characterized in that the first step includes the step of determining whether the image is a half tone image.

12. The method of recording image data according to claim 9, is characterized in that the pixel size is one of a first size and a second size smaller than the first size, and the second step includes the step of setting the pixel size to the first size when it is determined in the first step that the image is the binary image, and the step of setting to the second size when it is determined in the first step that the image is the pseudo half tone image.
